# FASCICULE DE BREVET EUROPEEN

(11) **EP 0 424 265 B1**
(45) Date de publication et mention de la délivrance du brevet: **29.12.1993**
(21) Numéro de dépôt: 90402935.2
(22) Date de dépôt: 18.10.1990
(51) Int. Cl.: G01V 5/00, G21F 5/00

(54) **Dispositif de mesure de la contamination radioactive sur des pièces de grande dimension**
Vorrichtung zur Messung der Strahlungsverseuchung von grossen Objekten
Apparatus for measuring radioactive contamination of large objects

(30) Priorité: 20.10.1989 FR 8913776
(43) Date de publication de la demande: 24.04.1991
(73) Titulaire: COMMISSARIAT A L'ENERGIE ATOMIQUE, 75015 Paris (FR)
(72) Inventeur: Costes, Jean-Raymond, F-26790 Rochegude (FR); Dacosta Vieira, David, F-13540 Aix en Provence (FR); Imbard, Gérald, F-84000 Avignon (FR)
(74) Mandataire: Mongrédien, André

(56) Documents cités:
- GB-A- 1 030 203
- US-A- 3 255 352
- US-A- 4 571 492
- US-A- 4 617 169

## Description

Le domaine de l'invention est celui du contrôle de la contamination radioactive de matériaux contaminés. L'invention trouve son application dans l'énergie nucléaire, au cours du démantèlement d'installations nucléaires, lors de leur maintenance, leur entretien ou leur déplacement. Le but de ces opérations est de récupérer les métaux pour les remettre dans le domaine public en vue d'une nouvelle utilisation.

En effet, dans le cadre du démantèlement d'un réacteur nucléaire, si l'on veut réutiliser des matériaux, tels que les métaux, faisant partis de l'installation, il est nécessaire d'apporter la preuve que le taux de radioctivité des déchets à évacuer ne dépasse pas la limite conforme à certains règlements. On peut être amené, dans ce cas, à exiger une radioactivité inférieure à 1 Becquerel par gramme (1 Bq/g). On peut être également amené à respecter dans ce but, le principe ALARA (As Low As Reasonable Achievable), qui consiste à décontaminer au mieux avant la récupération, ceci par opposition à la fusion des métaux contaminés.

Jusqu'à maintenant, le contrôle de la contamination radioactive s'effectue à l'aide de détecteurs, opérationnels sur quelques centimètres carrés. Le contrôle de la contamination sur de grandes pièces à l'aide de ce type de détecteur oblige à déplacer ces derniers sur toute la surface de la pièce et d'effectuer après chaque déplacement une mesure. Il est ensuite indispensable de traiter les résultats de chaque mesure ponctuelle. Dans le cadre du démantèlement d'un réacteur nucléaire, où la masse des matériaux à évacuer peut dépasser quatre cents tonnes, une telle méthode traditionnelle sur la totalité de la surface des déchets s'avère bien trop coûteuse et trop aléatoire.

Le but de l'invention est de remédier à ces inconvénients en fournissant un appareil de mesure de la contamination radioactive sur des pièces de grande dimension.

On impose qu'un tel appareil permette de trier par défilement des pièces dont le poids dépasse plusieurs centaines de kilogrammes. Le temps de contrôle pour de telles pièces ne doit pas dépasser un quart d'heure.

A cet effet, l'objet principal de l'invention est un dispositif de mesure de la radioactivité des pièces de grande dimension, par détection des rayonnements gamma. Le dispositif comprend au moins principalement deux ensembles de détection, composés chacun d'un détecteur de rayonnements gamma de grande surface de détection, délivrant un nombre de photons proportionnel au nombre de rayonnements gamma détectés, les deux détecteurs étant placés parallèlement entre eux, face à face, espacés l'un de l'autre d'une distance réglable en fonction de la largeur de la pièce à mesurer.

Le dispositif comprend également un dispositif de positionnement des détecteurs en fonction de la pièce à mesurer, constitué d'une structure porteuse, et un dispositif de sustentation et de déplacement de la pièce à mesurer pour la faire passer entre les deux détecteurs et permettre ainsi de mesurer les longues pièces par défilement. La position réglable des détecteurs leur permet de s'adapter aux différentes formes de pièces à mesurer.

Selon un aspect de l'invention, les deux photomultiplicateurs sont montés tête-bêche l'un par rapport à l'autre. Ceci permet de tenir compte de la dissymétrie éventuelle des détecteurs.

Selon un aspect de l'invention, les deux ensembles de détection comprennent chacun au moins un photomultiplicateur recevant les photons du détecteur et délivrant un signal électrique caractéristique de la mesure.

L'invention est avantageusement complétée d'un calculateur électronique.

Ce dernier peut comprendre des moyens de prise en compte des caractéristiques dimensionnelles, ainsi que de l'épaisseur des pièces et de l'écartement instantané des détecteurs.

Une réalisation préférentielle de l'invention prévoit un système de reconnaissance de forme de la pièce à l'entrés des détecteurs, ceci pour permettre une utilisation plus opérationnelle de ces derniers. De préférence, il est constitué d'un premier rideau optique perpendiculaire au parcours de la pièce et de deux deuxièmes rideaux optiques parallèles entre eux et solidaires chacun d'une partie de la structure porteuse.

Le calculateur électronique peut calculer le profil de répartition de la radioactivité de la pièce en fonction du défilement de celle-ci et fournir l'activité surfacique moyenne à partir des données du système de reconnaissance.

L'invention et ses caractéristiques techniques seront mieux comprises à la lecture de la description qui suit, annexée des figures représente respectivement :
- figure 1, un schéma explicatif de la détection utilisée dans le dispositif selon l'invention ;
- figure 2, un graphe explicatif relatif aux résultats obtenus à différents points situés entre les détecteurs, dans un cas particulier de détection ;
- figure 3, une vue longitudinale du dispositif selon l'invention ; et
- figure 4, une vue de dessus du dispositif selon l'invention.

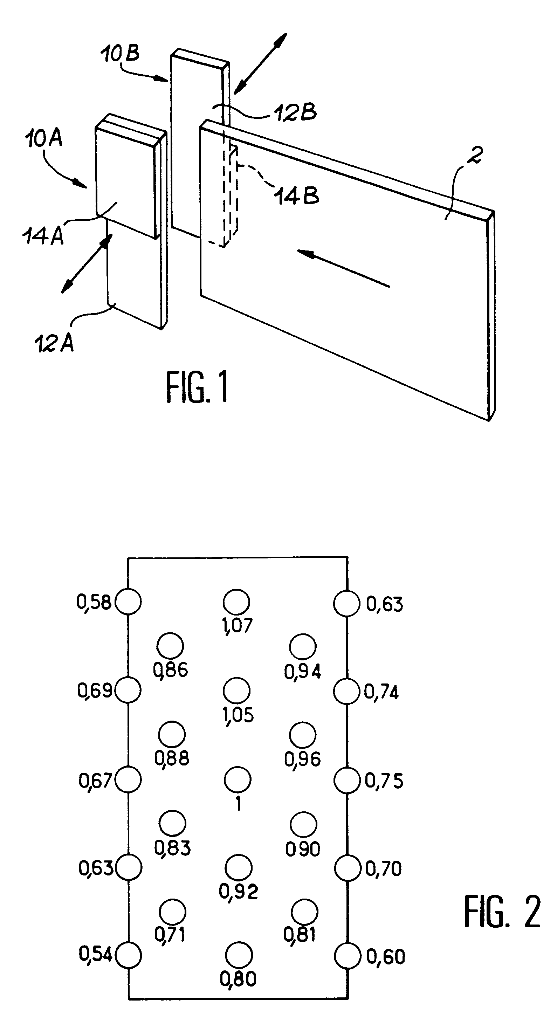

Selon le principe de l'invention, la figure 1 montre une pièce 2 en train de passer entre deux ensembles de détection 10A et 10B. Le pièce 2 est une tôle de deux mètres de long. Toutefois, le dispositif selon l'invention peut effectuer des mesures sur des pièces dépassant cinq cents kilogrammes et étant inscrites dans un parallèlépipède, dont les dimensions sont : 1 x 1 x 2 mètres. En effet, la plupart des pièces à mesurer sont des déchets constitués de portions de grosses tuyauteries découpées selon leurs génératrices. Le diamètre de ces tuyauteries peut atteindre 1,6 mètre. Dans ce type de déchets, c'est la face intérieure de ces morceaux de tuyauteries qui est contaminée. D'autres déchets peuvent être constitués par des objets plus compacts, tels que des portions de grosses vannes ou de soufflets.

Les deux ensembles de détection 10A et 10B ont pour organes de mesure, chacun un détecteur de rayonnements gamma 12A et 12B. Chacun de ces détecteurs a une hauteur d'au moins 1 mètre et une largeur égale à environ 0,5 mètre. Ils sont disposés debout et peuvent être écartés l'un de l'autre d'au moins 1 mètre. De la sorte, leur hauteur peut assurer des mesures de pièces dont la hauteur avoisine 1 mètre, leur écartement leur permettant de mesurer les pièces dont la largeur avoisine également 1 mètre. Ces détecteurs de rayonnements gamma 12A et 12B captent les rayonnements pendant quelques secondes et fournissent un nombre de photons proportionnel au nombre de rayonnements détectés.

Dans le but de compter le nombre de rayonnements gamma émis par la pièce 2, on évalue le nombre de photons délivrés par chacun des détecteurs 12A et 12B au moyen de photomultiplicateurs 14A et 14B, associés respectivement au détecteurs 12A et 12B. Chaque photomultiplicateur 14A et 14B délivre un signal électrique caractéristique de la mesure.

Pour effectuer la mesure de la contamination radioactive de la pièce à mesurer, il est nécessaire de connaître la forme, et en particulier l'épaisseur de la pièce 2 à mesurer et la distance séparant cette pièce des détecteurs 12A et 12B. Ces paramètres sont introduits dans un calculateur électronique de commande et de traitement du signal électrique, utilisé pour commander le dispositif et donner le résultat de la mesure. Le fait de connaître l'épaisseur de la pièce permet de tenir compte de l'auto-absorption due à l'épaisseur de cette même pièce et de l'effet d'ombre au bruit de fond créé par l'introduction de la masse du déchet.

Dans le but de compenser une légère déperdition de la sensibilité de haut en bas, les photomultiplicateurs 14A et 14B sont montés tête-bêche.

Les deux détecteurs 12A et 12B sont évidemment placés parallèlement l'un par rapport à l'autre et face à face. Ceci permet de minimiser les écarts de mesure dûs à l'hétérogénéité de répartition de l'activité. En effet, si un détecteur se trouve relativement proche d'un point de la pièce, il voit très bien se premier point proche. Par contre, il voit moins bien un deuxième point éloigné par rapport au point proche. Le deuxième détecteur étant placé face au premier, de l'autre côte de la pièce, celui-ci pourra voir très bien le deuxième point éloigné du premier détecteur, alors qu'il verra moins bien le premier point proche du premier détecteur. L'emploi de deux détecteurs permet ainsi de tenir compte de la forme de pièce à mesurer.

Dans le but d'atténuer le bruit de fond, notamment dû à la radioactivité naturelle, les parties actives des détecteurs 12A et 12B sont recouvertes d'un blindage. Il est également préférable de limiter électroniquement la plage opérationnelle des détecteurs. Ceci permet de tenir compte du spectre du bruit de fond existant sur la chantier.

Le passage d'un déchet d'épaisseur relativement importante, entre les deux détecteurs 12A et 12B, entraîne une diminution du bruit de fond, appelé effet d'ombre. Cet effet cache une partie de la contamination déposée sur le déchet à mesurer. Il est donc important de tenir compte de l'épaisseur de la pièce à mesurer. Cette épaisseur est également utilisée pour tenir compte de l'autoabsorption des rayonnements.

Le dispositif selon l'invention est, de préférence, piloté par un calculateur électronique de commande.

Pour exploiter les différents paramètres, on utilise le calculateur électronique pour le traitement du signal électrique de la mesure. Dans son programme de calcul, le système comprend des moyens de prise en compte de ces différents phénomènes inhérents à ce type de mesure. Tous les paramètres de calculs sont fournis par les détecteurs 12A et 12B et un système de reconnaissance de forme. Le calculateur électronique peut en outre calculer le profil de répartition de la radioactivité en fonction du défilement de la pièce.

La figure 2 représente une cartographie de la sensibilité d'un détecteur, faite au moyen d'une source de césium 137, collimatée par du plomb. On y constate une diminution de la sensibilité sur les bords verticaux (0,54 au minimum sur un bord contre 1 au centre). Cette diminution est prise en compte dans la réalisation du dispositif selon l'invention, puisque les détecteurs sont placés verticalement et que les pièces à mesurer défilent horizontalement.

Les différentes caractéristiques du dispositif selon l'invention permettent de disposer d'un volume de contrôle où les photons gamma sont perçus de façon sensiblement homogène.

Le principe du présent dispositif, utilisant un fonctionnement par défilement des pièces à mesurer, permet également de compter les déchets et d'effectuer des mesures concernant la contamination superficielle de chaque pièce. A cet effet, on peut effectuer par exemple une mesure tous les dix centimètres.

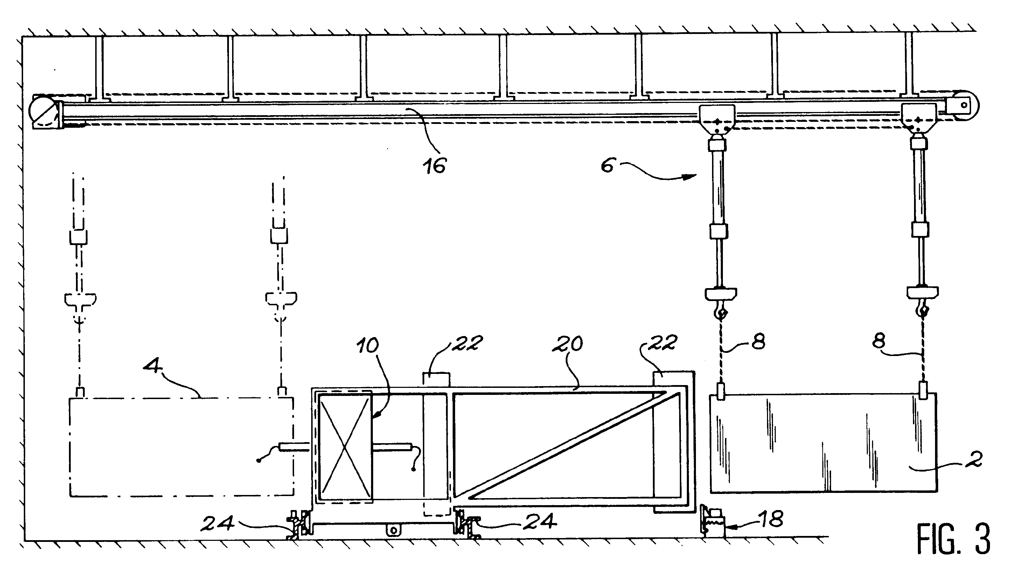

En référence à la figure 3, la pièce 2 où le déchet à mesurer, est toujours représentée sous la forme d'une tôle. Elle est représentée dans une première position avec un repère 2, au moment où elle commence son parcours dans le dispositif selon l'invention. Elle est également représentée à côté en traits mixtes et repérée 4 dans la position où elle termine son parcours dans le dispositif.

La pièce 2 ou 4 est donc maintenue suspendue à l'aide d'un dispositif de sustentation 6, constitué d'un chariot motorisé équipé des deux pesons électroniques, dont les deux câbles 8 sont attachés aux deux extrémités de la pièce 2 au moyen de pinces autobloquantes. Dans ce système, le dispositif de sustentation 6 est complété d'un pont roulant 16 permettant à la pièce de traverser le dispositif selon l'invention. A l'entrée de ce dernier, un gabarit de hauteur 18 est fixé sur le sol, afin de vérifier le positionnement vertical de la pièce 2, de manière à ce que celle-ci ne bute pas dans les éléments de la structure du dispositif se trouvant à même le sol. Une structure porteuse 20 supporte à la fois les ensembles de détection 10A et 10B et des éléments du système de reconnaissance de forme 22, qui sera détaillé ultérieurement. Les ensembles de détection 10A et 10B sont ici au nombre de deux, mais des ensembles de détection supplémentaires pourraient être utilisés. La structure porteuse 20 constitue également le dispositif de positionnement des ensembles de détection 10A et 10B. A cet effet, elle est placée sur des rails latéraux 24, placés parallèlement entre eux sur le sol, transversalement à la structure porteuse 20. Ils permettent de déplacer au moins un des ensembles de détection 10A, et donc de positionner transversalement les deux ensembles de détection 10A et 10B l'un par rapport à l'autre, en fonction de l'épaisseur de la pièce 2.

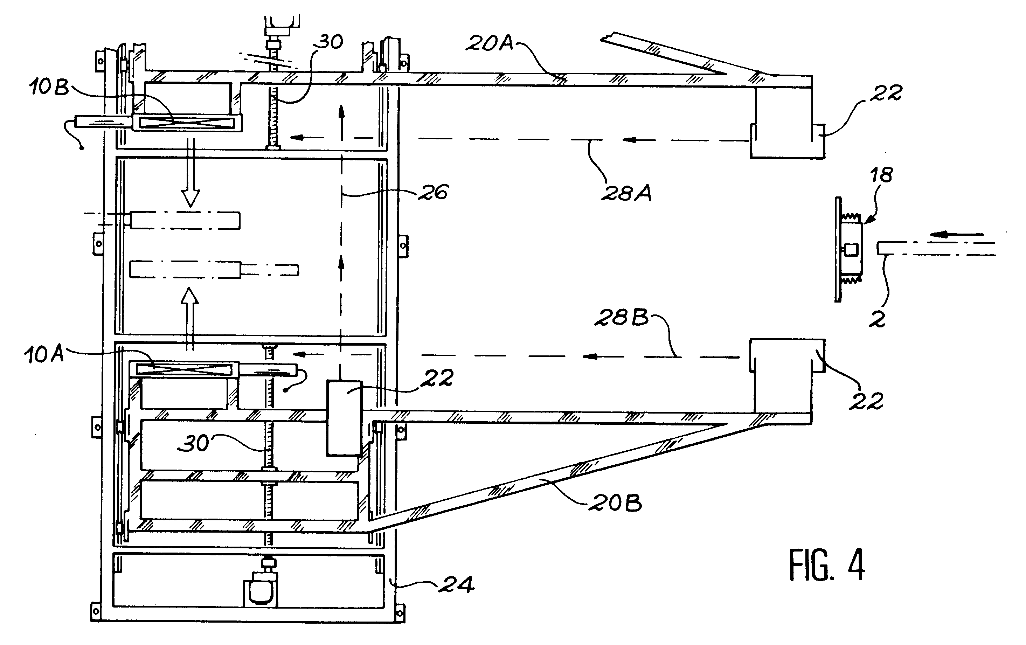

La figure 4 permet de détailler cette installation. On y retrouve les éléments décrits sur la figure 3, et en particulier les détails de la structure porteuse 20. Une première partie 20A de celle-ci est positionée à l'extrémité des rails 24. La deuxième partie 20B est positionnée dans une position intermédiaire, sur les rails 24. Chacune de ces deux parties est porteuse d'un ensemble de détection 10A ou 10B. Cette structure porteuse 20 supporte également le système de reconnaissance de forme 22 de la pièce 2. Une réalisation particulière du système de reconnaissance de forme 22 est constituée d'un premier rideau lumineux 26 se trouvant sur le chemin de la pièce 2. Son rôle est de détecter la présence de la pièce à mesurer. Le système de reconnaissance 22 comprend également deux deuxièmes rideaux 28A et 28B parallèles entre eux et perpendiculaires aux premiers rideaux 26. Ils sont montés chacun sur une partie 20A ou 20B de la structure porteuse. Leur fonction est de détecter la présence de la pièce dans le sens de sa largeur.

Sur la figure 4, on peut distinguer également deux systèmes à vis sans fin 30 permettant de déplacer les deux parties 20A et 20B de la structure porteuse.

Le déroulement d'une mesure peut s'effectuer de la manière suivante. La pièce 2 est amenée au-dessus du gabarit 18, jusqu'à ce qu'elle vienne interrompre le premier rideau lumineux 26. Puis, elle recule d'une distance connue de façon à libérer les rideaux lumineux 26.

Ensuite, les deux parties 20A et 20B de la structure porteuse sont rapprochées l'une de l'autre à l'aide des systèmes à vis sans fin 30, jusqu'à ce que chacun des deuxièmes rideaux 28A et 28B soit interrompu par les parois de la pièce à mesurer 2. La largeur globale de la pièce est ainsi détectée et les ensembles de mesure 10A et 10B peuvent être reculés d'une distance choisie par un léger écartement des deux parties mobiles 20A et 20B de façon à libérer les deux rideaux 28A et 28B. Le système de reconnaissance de forme 22 permet ainsi au calculateur de fournir l'activité surfacique moyenne. Le déplacement de la pièce vers l'avant coupe d'abord le rideau lumineux 26 par l'avant, puis le libère par l'arrière, ce qui permet de connaître la longueur de la pièce et d'ajuster les début et fin de mesure.

Un chariot de reprise de la pièce peut être prévu à la sortie du dispositif selon l'invention.

Tous les mouvements des deux parties de la structure porteuse 20A et 20B sont contrôlés par le calculateur qui peut être un microordinateur. Celui-ci peut procéder alors à tous les calculs de rendement, de longueur de la pièce, d'effet d'ombre, de distance entre les compteurs, d'atténuation et de calculs d'activité en résultant.

## Revendications

1. Dispositif de mesure de la contamination radioactive de pièces de grande dimensions par détection des rayonnements gamma, caractérisé en ce qu'il comprend :
- au moins deux ensembles de détection (10) comprenant chacun un détecteur de rayonnements gamma (12A, 12B) de grande surface de détection, délivrant un nombre de photons proportionnel au nombre de rayonnements gamma détectés, les deux détecteurs (12A, 12B) étant placés parallèles entre eux, face à face, espacés l'un de l'autre d'une distance réglable en fonction de la largeur de la pièce à mesurer ;
- un dispositif de positionnement des ensembles de détection (10A, 10B) en fonction de la pièce à mesurer (2) constitué d'une structure porteuse (20) ; et
- un système de sustentation et de déplacement (6, 16) de la pièce à mesurer (2) pour faire passer cette pièce (2) entre les deux ensembles de détection (10A, 10B) et permettre la mesure des longues pièces par défilement.

2. Dispositif selon la revendication 1 ou 2, caractérisé en ce que les ensembles de détection (10A, 10B) comprennent un photomultiplicateur (14A, 14B) recevant les photons d'un détecteur (12A, 12B) délivrant un signal électrique caractéristique de la mesure.

3. Dispositif selon la revendication 2, caractérisé en ce que les deux photomultiplicateurs (14A, 14B) sont montés tête-bêche.

4. Dispositif selon la revendication 1 ou 3, caractérisé en ce qu'il comprend un système de reconnaissance de forme (22) de la pièce (2, 4) à l'entrée des deux ensembles de détection (10A, 10B).

5. Dispositif selon l'une quelconque des revendications précédentes, caractérisé en ce qu'il comprend un calculateur électronique pour la commande du dispositif et le traitement du signal électrique de la mesure.

6. Dispositif selon la revendication 5, caractérisé en ce que le calculateur électronique comprend des moyens de prise en compte des caractéristiques dimensionnelles de la pièce (2), ainsi que de son épaisseur et de l'écartement des détecteurs (12A, 12B).

7. Dispositif selon la revendication 4, caractérisé en ce que le système de reconnaissance de forme (22) de la pièce (2, 4) est constitué d'un premier rideau optique (26) perpendiculaire au parcours de la pièce (2, 4) et de deux deuxièmes rideaux optiques (28A, 28B) parallèles entre eux, perpendiculaires au premier rideau (26) et solidaires chacun d'une partie (20A, 20B) de la structure porteuse (20).

8. Dispositif selon les revendications 4 et 5, caractérisé en ce qu'un profil de répartition de la radioactivité est calculé par le calculateur électronique en fonction du défilement de la pièce (2).

9. Dispositif selon la revendication 5, caractérisé en ce que le calculateur fournit l'activité surfacique moyenne, à partir des données du système de reconnaissance de forme (22).

## Patentansprüche

1. Vorrichtung zur Messung der radioaktiven Verseuchung von großen Teilen durch Detektion von Gamma-Strahlen,
dadurch **gekennzeichnet,**
daß sie umfaßt:
- wenigstens zwei Detektionsaufbauten (10), wovon jede einen Detektor für Gamma-Strahlen (12A, 12B) mit großer Detektionsfläche enthält, der eine Anzahl Photonen liefert, die der Anzahl der nachgewiesenen Gamma-Strahlen proportional ist, wobei die beiden Detektoren (12A, 12B) parallel zueinander angebracht sind, sich gegenüberstehend, beabstandet voneinander durch eine Distanz, die einstellbar ist entsprechend der Breite des zu messenden Teils;
- eine Einrichtung zum Positionieren der Detektionaufbauten (10A, 10B) in Abhängigkeit von dem zu messenden Teil, bestehend aus einer Trägerstruktur (20); und
- ein Aufhängungs- und Verschiebungssystem (6, 16) des zu messenden Teils (2), um dieses Teil (2) zwischen den beiden Detektionsaufbauten (10A, 10B) durchbewegen zu können, und die Messung von langen Teilen durch Vorbeiführung zu ermöglichen;

2. Vorrichtung nach Anspruch 1, dadurch gekennzeichnet, daß die Detektionaufbauten (10A, 10B) einen Photovervielfacher (14A, 14B) enthalten, der die Photonen eines Detektors (12A, 12B) empfängt, und ein für die Messung charakteristisches Signal liefert.

3. Vorrichtung nach Anspruch 2, dadurch gekennzeichnet, daß die beiden Photovervielfacher (14A, 14B) entgegengesetzt montiert sind.

4. Vorrichtung nach einem der Ansprüche 1 oder 3, dadurch gekennzeichnet, daß sie am Eingang der beiden Detektionsaufbauten (10A, 10B) ein Formerkennungssystem (22) des Teils (2, 4) enthält.

5. Vorrichtung nach einem der vorhergehenden Ansprüche, dadurch gekennzeichnet, daß sie einen Computer umfaßt für die Steuerung der Vorrichtung und die Verarbeitung des elektrischen Signals der Messung.

6. Vorrichtung nach Anspruch 5, dadurch gekennzeichnet, daß der Computer Mittel zur Berücksichtigung der Dimensionscharakteristika des Teile (2), sowie seiner Breite, und des Abstands der Detektoren (12A, 12B) enthält.

7. Vorrichtung nach Anspruch 4, dadurch gekennzeichnet, daß das Formerkennungssystem (22) des Teils (2, 4) gebildet wird durch einen ersten optischen Vorhang (26), senkrecht zum Durchlauf des Teils (2, 4), und durch zwei zweite optische Vorhänge (28A, 28B), parallel zueinander, senkrecht zum ersten Vorhang (26), und jeder fest verbunden mit einem Teil (20A, 20B) der Trägerstruktur (20).

8. Vorrichtung nach den Ansprüchen 4 und 5, dadurch gekennzeichnet, daß ein Verteilungsprofil der Radioaktivität errechnet wird durch den Computer, entsprechend dem Durchlauf des Teils (2).

9. Vorrichtung nach Anspruch 5, dadurch gekennzeichnet, daß der Computer die mittlere Oberflächenaktivität liefert, ausgehend von den Daten des Formerkennungssystems (22).

## Claims

1. Device to measure the radioactive contamination of large pieces via the detection of gamma radiations, characterized in that it comprises:
- at least two detection units (10) each including a gamma radiation detector (12A,12B) with a large detection surface delivering a number of photons proportional to the number of gamma radiations detected, the two detectors (12A,12B) being placed opposite and parallel to each other and spaced from each other by a distance able to be adjusted according to the width of the piece to be measured;
- a device to position the detection units (10A,10B) according to the piece (2) to be measured and constituted by a bearer structure (20), and
- a system (6,16) for lifting and moving the piece (2) to be measured so as to have this piece (2) pass between the two detection units (10A,10B) and enabling the moving long pieces to be measured.

2. Device according to claim 1 or 2, characterized in that the detection units (10A,10B) include a photoelectron multiplier (14A,14B) receiving the photons of a detector (12A,12B) delivering an electric signal characteristic of the measurement.

3. Device according to claim 2, characterized in that the two photoelectron multipliers (14A,14B) are mounted head-to-tail.

4. Device according to claim 1 or 3, characterized in that it includes a system (22) for recognizing the shape of the piece (2,4) at the inlet of the two detection units (10A,10B).

5. Device according to any one of the preceding claims, characterized in that it includes a computer to control the device and to process the electric measurement signal.

6. Device according to claim 5, characterized in that the computer includes means for taking into account the dimensional characteristics of the piece (2), as well as its thickness . and the spacing of the detectors (12A,12B).

7. Device according to claim 4, characterized in that the system (22) for recognizing the shape of the piece (2,4) is constituted by a first clip-on lens attachment (26) perpendicular to the distance covered by the piece (2,4) and two second clip-on lens attachments (28A,28B) parallel to each other, perpendicular to the first clip-on lens attachment (26) and each integral with one section (20A,20B) of the bearer structure (20).

8. Device according to claims 4 and 5, characterized in that a radioactivity distribution profile is calculated by the computer according to the movement of the piece (2).

9. Device according to claim 5, characterized in that the computer furnishes the average surface activity on the basis of the data of the shape recognition system (22).
